## Europäisches Patentamt

## European Patent Office

## Office européen des brevets

(19)

(11) Veröffentlichungsnummer: **0 137 531**
**B1**

(12)                    **EUROPÄISCHE PATENTSCHRIFT**

(45) Veröffentlichungstag der Patentschrift:
18.03.87

(21) Anmeldenummer: 84201181.9

(22) Anmeldetag: 15.08.84

(51) Int. Cl.⁴: **C 03 C 17/02,** G 02 B 6/10,
G 02 B 3/00

(54) Verfahren zur Herstellung von Mikrolinsen.

(30) Priorität: 16.08.83 DE 3329511

(43) Veröffentlichungstag der Anmeldung:
17.04.85 Patentblatt 85/16

(45) Bekanntmachung des Hinweises auf die Patenterteilung:
18.03.87 Patentblatt 87/12

(84) Benannte Vertragsstaaten:
DE FR GB

(56) Entgegenhaltungen:
EP-A-0 017 296
EP-A-0 052 901
DE-C-242 124

(73) Patentinhaber: **Philips Patentverwaltung GmbH,
Billstrasse 80, D-2000 Hamburg 28 (DE)**
(84) Benannte Vertragsstaaten: **DE**

(73) Patentinhaber: **N.V. Philips' Gloeilampenfabrieken,
Groenewoudseweg 1, NL- 5621 BA Eindhoven (NL)**
(84) Benannte Vertragsstaaten: **FR GB**

(72) Erfinder: **Böhm, Heinz, Dipl.- Phys., Kneippstrasse
2, D-8520 Erlangen (DE)**

(74) Vertreter: **Peuckert, Hermann, Philips
Patentverwaltung GmbH Billstrasse 80 Postfach
10 51 49, D-2000 Hamburg 28 (DE)**

LIBER, STOCKHOLM 1987

## Beschreibung

Die Erfindung betrifft ein Verfahren zur Herstellung von Mikrolinsen durch Abscheiden mehrerer glasartiger Schichten unterschiedlichen Brechungsindexes aus der Dampfphase auf eine mit Vertiefungen gestaltbare Glasplatte. Danach hergestellte Mikrolinsen werden in der optischen Nachrichtentechnik verwendet.

Nach dem in der europäischen Patentanmeldung Nr. 0 017 296 beschriebenen Verfahren ist es bekannt, kugelförmige Linsen, sogenannte Luneberg-Linsen in einer Glasplatte herzustellen. Der dadurch erzeugbare Linsentyp ist jedoch aufgrund spezieller Eigenschaften nur begrenzt einsetzbar.

Der Erfindung liegt die Aufgabe zugrunde, ein Verfahren zur Herstellung von Mikrolinsen anzugeben, mit dem auch noch andere vielseitig einsetzbare Abbildungsmittel herstellbar sind.

Diese Aufgabe wird durch ein Verfahren der eingangs genannten Art dadurch gelöst, daß zur Herstellung von Mikrolinsen mit längenabhängigen optischen Eigenschaften in der Glasplatte langsgestreckte Vertiefungen angebracht werden und daß die Glasplatte quer zur Ausrichtung der Vertiefungen in Mikrolinsen vorbestimmbarer Länge geteilt wird. Der jeweiligen Teilung geht dabei eine Berechnung der Abstände zwischen Teilungsflächen voraus, die sich aufgrund von längenabhängigen optischen Eigenschaften von Mikrolinsen ergeben.

Die Erfindung wird mit vorteilhaften Ausgestaltungen anhand der in der Zeichnung schematisch dargestellten Ausführungsbeispiele näher erläutert und beschrieben.

Es zeigen:

Figur 1 - 3: In dreidimensionaler Ansicht verschiedene Stadien einer nach dem Verfahren hergestellten Gradienten-Index-Stablinse.

Figur 4: In dreidimensionaler Ansicht ein in einem Arbeitsgang hergestelltes Linsenpaar.

Figur 5: In dreidimensionaler Ansicht eine richtungsändernde Gradienten-Index-Stablinse.

Figur 6: In dreidimensionaler Ansicht eine weitere Linsenversion mit versetzter optischer Achse.

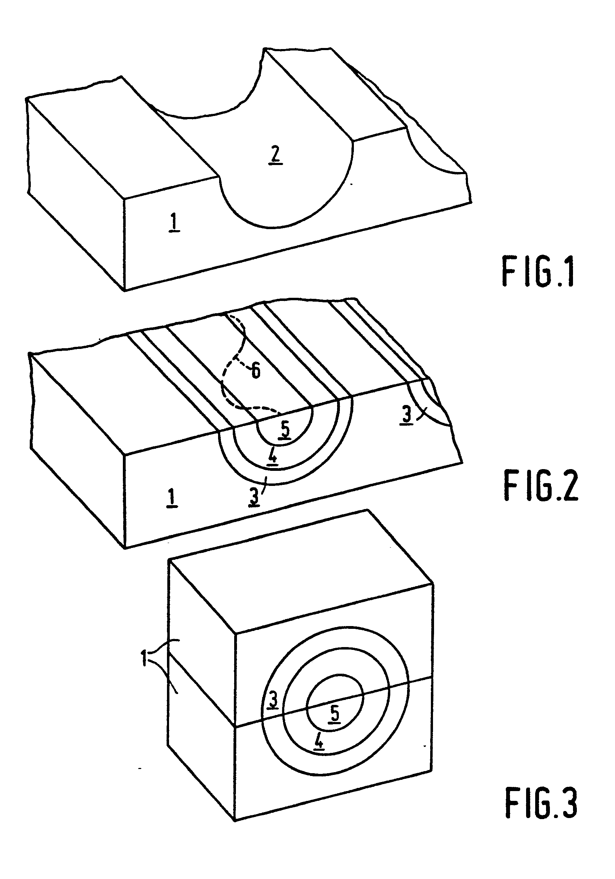

Die in Figur 1 vergrößert herausgezeichnete Glasplatte 1 enthält halbzylinderförmige Vertiefungen 2, die sich über die gesamte Länge der Glasplatte 1 erstrecken können. Mit Hilfe des vom Stand der Technik bekannten CVD-Verfahrens (EP-PA 0 017 296) werden in die Vertiefungen 2 aus der Dampfphase glasartige Schichten 3, 4, 5 abgeschieden, die auch verbleiben, wenn die Dicke der Glasplatte wieder auf den ursprünglichen Wert reduziert worden ist.

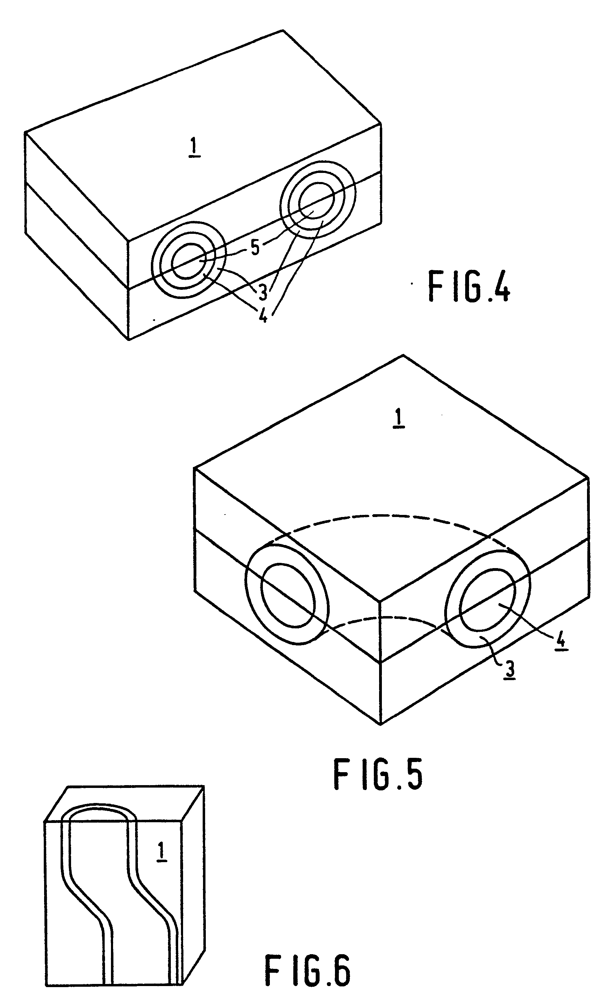

Die optische Achse danach hergestellter Linsenhälften liegt in Längsrichtung der Mulde 2 und in der Oberfläche der Glasplatte 1. Es würde ein Lichtstrahl entlang der gepunktetgezeichneten Linie 6 gelenkt. In einem praktischen Ausführungsbeispiel nach Figur 2 wären die aus Gründen bessere Übersichtlichkeit gezeichneten drei Schichten mit einer Vielzahl von Glasschichten zu ergänzen durch die der gewünschte nahezu stufenlose Berechnungsindexverlauf nachgebildet wird.

Eine Gradienten-Index-Stablinse entsteht durch das Zusammenfügen zweier in der gleichen Weise hergestellter, spiegelbildlich gestalteter Hälften (Figur 3), deren Länge nach Strahlperiode (pitch) bemessen und ohne maßstäbliche Relation gezeichnet ist. Im Gegensatz zu in anderer Weise hergestellten Gradienten-Index-Stablinsen verbleibt eine Schnittebene, in der die optische Achse liegt, die jedoch die optischen Eigenschaften kaum beeinflußt.

In weiterer Ausgestaltung ist das dargestellte Verfahren zur Herstellung von Linsenfeldern geeignet, wie Figur 4 zeigt.

Eine besonders vorteilhafte Weiterentwicklung bietet das erfindungsgemäße Verfahren dadurch an, daß die optisch wirksamen Teile bereits durch Herstellung der Form der Vertiefung 2 beeinflußbar sind. Es ist daher möglich, Stablinsen mit Krümmung herzustellen, wie Figur 5 zeigt. Berechnungen haben gezeigt, daß sich solche Gradienten-Index-Stablinsen herstellen lassen, deren optische Wege länger als eine Strahlperiode sind. Für derart gekrümmte Gradienten-Index-Stablinsen war bisher kein Herstellungsverfahren bekannt. Solche Linsen können durch die Erfindung erst geschaffen werden.

Die Vielfalt der Einsatzmöglichkeiten des neuen Verfahrens und der daraus herstellbaren Linsen wird noch anhand der in Figur 6 schematisch dargestellten Linsenhälfte gezeigt, die es ermöglicht, Linsen herzustellen, die bei entsprechender Strahlperiodenlänge einen vorgebbaren Strahlversatz zu erzielen.

Das Gemeinsame aller Versionen ist, daß die optische Eigenschaft erst beim Teilen bestimmt wird. Dem Teilvorgang, z.B. Schneiden, Sägen, folgt daher sinnvollerweise eine Nachbehandlung der Schnittfläche, um die Güte solcher Mikrolinsen zu verbessern.

## Patentansprüche

> 1. Verfahren zur Herstellung von Mikrolinsen durch Abscheiden mehrerer glasartiger Schichten unterschiedlichen Brechungsindexes aus der Dampfphase in eine mit Vertiefungen ausgestaltbare Glasplatte, dadurch gekennzeichnet, daß zur Herstellung von Mikrolinsen mit längenabhängigen optischen Eigenschaften in der Glasplatte (1) längsgestreckte Vertiefungen (2) angebracht werden und daß die Glasplatte (1) quer zur Ausrichtung der Vertiefungen in Mikrolinsen vorbestimmbarer Länge geteilt wird.

2. Verfahren nach Anspruch 1, dadurch gekennzeichnet, daß mindestens zwei Mikrolinsen gemeinsam aus der Glasplatte entnommen werden (Fig. 4).

3. Verfahren nach Anspruch 1 oder 2, dadurch gekennzeichnet, daß Vertiefungen (2) als Furchen halbkreisförmigen Durchmessers angebracht werden.

4. Verfahren nach Anspruch 1, 2, oder 3, dadurch gekennzeichnet, daß die Vertiefungen (2) entlang einer vorgegebenen Bahn folgen.

5. Verfahren nach Anspruch 4, dadurch gekennzeichnet, daß Vertiefungen mit zwei sich aufhebenden, einen Strahlversatz bewirkenden Krümmungen angebracht werden.

6. Verfahren nach Anspruch 4, dadurch gekennzeichnet, daß Vertiefungen mit sich ändern dem Durchmesser verwendet werden.

**Claims**

1. Method of producing microlenses by the deposition from the vapour phase of several glassy layers of different refractive indices on a glass plate provided with grooves, characterized in that for the purpose of producing microlenses with length-dependent optical properties longitudinal grooves (2) are made in the glass plate (1) and the said glass plate (1) is divided in microlenses of predeterminable length transversely to the direction of the grooves.

2. Method as claimed in Claim 1, characterized in that at least two microlenses are jointly obtained from the glass plate (fig. 4).

3. Method as claimed in Claim 1 or 2, characterized in that grooves (2) in the form of recesses of semicircular diameter are introduced.

4. Method as claimed in Claim 1, 2 or 3, characterized in that the grooves (2) follow a prescribed path.

5. Method as claimed in Claim 4, characterized in that grooves with two self-cancelling curvatures, effecting a ray displacement, are provided.

6. Method as claimed in Claim 4, characterized in that grooves with a changing diameter are employed.

**Revendications**

1. Procédé pour la réalisation de microlentilles par dépôt de plusieurs couches vitreuses à indices de réfraction différents à partir de la phase de vapeur sur une plaque en verre munie de rainures, caractérisé en ce que pour la réalisation de microlentilles présentant des propriétés optiques dépendant de la longueur, des rainures longitudinales (2) sont ménagées dans la plaque en verre (1) et que la plaque en verre (1) est divisée d'une façon transversale par rapport à l'axe géométrique des rainures en microlentilles de longueur préalablement déterminée.

2. Procédé selon la revendication 1, caractérisé en ce qu'au moins deux microlentilles peuvent être prélevées sur la plaque en verre (figure 4).

3. Procédé selon la revendication 1 ou 2, caractérisé en ce qu'on réalise des rainures (2) sous forme de sillons de diamètre semicirculaire.

4. Procédé selon la revendication 1, 2 ou 3, caractérisé en ce que les rainures (2) suivent un trajet prescrit.

5. Procédé selon la revendication 4, caractérisé en ce qu'on réalise des rainures présentant deux courbures, qui se compensent et qui provoquent un déplacement de rayonnement.

6. Procédé selon la revendication 4, caractérisé par la réalisation de rainures d'un diamètre variable.

FIG.1

FIG.2

FIG.3

**FIG.4**

**FIG.5**

**FIG.6**